# EUROPEAN PATENT APPLICATION

(11) **EP 4 545 301 A1**
(43) Date of publication of application: **30.04.2025**
(21) Application number: 24203737.2
(22) Date of filing: 30.09.2024
(51) Int. Cl.: B33Y 80/00, B23B 1/00, B23C 1/00, B23D 1/00, B23P 15/26, B23P 17/00, F28F 7/02, F28D 7/16

(54) **HEAT EXCHANGER AND HEADER CONSTRUCTION**

(30) Priority: 23.10.2023 US 202318491909
(71) Applicant: Hamilton Sundstrand Corporation, Charlotte, NC 28217-4578 (US)
(72) Inventor: KILCHYK, Viktor, Lancaster (US); ARMY, Donald E., Enfield (US)
(74) Representative: Dehns

(57) **Abstract**

A heat exchanger (10) includes a heat exchanger body (12) having a plurality of heat exchanger tubes (14), an inlet manifold connected to the heat exchanger body and configured to distribute a flow of fluid from a fluid inlet (28) of the inlet manifold (30) to the plurality of heat exchanger tubes (14), and an outlet manifold (40) connected to the heat exchanger body (12) and configured to collect the flow of fluid from the plurality of heat exchanger tubes (14) and direct the flow of fluid through a fluid outlet (42). The heat exchanger body (12) is formed via one or more additive manufacturing processes, and at least one of the inlet manifold (30) and the outlet manifold (40) is formed via one or more subtractive manufacturing processes.

## Description

### TECHNICAL FIELD

Exemplary embodiments pertain to the art of heat exchangers and in particular to the construction of fluid-air heat exchangers having fluid headers.

### BACKGROUND

Heat exchangers are utilized in a variety of applications, such as cooling of engines or motors, climate control (heating, ventilation and air conditioning systems) or the like. Utilizing additive manufacturing techniques, such as 3D printing or the like, in manufacturing heat exchangers allows for the manufacture of shapes and configurations of heat exchangers not easily achieved via conventional manufacturing operations.

Utilizing additive manufacturing processes, however, imposes certain geometrical constraints on the heat exchanger configuration. For instance, due to 3D printing constraints, the geometry is limited in maximum horizontal angle to about 45 degrees. This results in longer transition from a header to the high surface area sections of a heat exchanger body, thus lowering overall effectiveness of the heat exchanger (HX), or alternatively requiring additional supports to be incorporated to the structure during manufacture. The additional supports may be difficult to access and remove in the locations inside of the unit once manufacture of the heat exchanger is completed.

### BRIEF DESCRIPTION

In one exemplary embodiment, a heat exchanger includes a heat exchanger body having a plurality of heat exchanger tubes, an inlet manifold connected to the heat exchanger body and configured to distribute a flow of fluid from a fluid inlet of the inlet manifold to the plurality of heat exchanger tubes, and an outlet manifold connected to the heat exchanger body and configured to collect the flow of fluid from the plurality of heat exchanger tubes and direct the flow of fluid through a fluid outlet. The heat exchanger body is formed via one or more additive manufacturing processes, and at least one of the inlet manifold and the outlet manifold is formed via one or more subtractive manufacturing processes.

Additionally or alternatively, in this or other embodiments the heat exchanger body includes a plurality of fins connecting heat exchanger tubes of the plurality of heat exchanger tubes.

Additionally or alternatively, in this or other embodiments the inlet manifold includes a plurality of inlet passages connecting the fluid inlet to the plurality of heat exchanger tubes.

Additionally or alternatively, in this or other embodiments the plurality of inlet passages includes a plurality of first inlet passages extending from the fluid inlet and a plurality of second inlet passages branching off from the plurality of first inlet passages.

Additionally or alternatively, in this or other embodiments the outlet manifold includes a plurality of outlet passages connecting the fluid outlet to the plurality of heat exchanger tubes.

Additionally or alternatively, in this or other embodiments the plurality of outlet passages includes a plurality of first outlet passages extending from the plurality of heat exchanger tubes and a plurality of second outlet passages. Each second outlet passage of the plurality of second outlet passages is fluidly connected to two or more first outlet passages of the plurality of first outlet passages.

Additionally or alternatively, in this or other embodiments the additive manufacturing processes includes 3D printing.

Additionally or alternatively, in this or other embodiments the subtractive manufacturing processes includes one or more of machining and milling.

In another exemplary embodiment, a method of forming a heat exchanger includes forming a heat exchanger body including a plurality of heat exchanger tubes via one or more additive manufacturing processes, and forming at least one of the inlet manifold and the outlet manifold via one or more subtractive manufacturing processes. The inlet manifold is connected to the heat exchanger body and is configured to distribute a flow of fluid from a fluid inlet of the inlet manifold to the plurality of heat exchanger tubes. The outlet manifold is connected to the heat exchanger body and is configured to collect the flow of fluid from the plurality of heat exchanger tubes and direct the flow of fluid through a fluid outlet.

Additionally or alternatively, in this or other embodiments one of the inlet manifold and the outlet manifold is utilized as a base for forming the heat exchanger body via the one or more additive manufacturing processes.

Additionally or alternatively, in this or other embodiments a block is formed at the location of one of the inlet manifold and the outlet manifold via one or more additive manufacturing processes simultaneously with the forming of the heat exchanger body. One of the inlet manifold and the outlet manifold are formed from the block via one or more subtractive manufacturing processes.

Additionally or alternatively, in this or other embodiments a block is formed at the locations of both of the inlet manifold and the outlet manifold via one or more additive manufacturing processes simultaneously with the forming of the heat exchanger body. Both of the inlet manifold and the outlet manifold are formed from the blocks via one or more subtractive manufacturing processes.

Additionally or alternatively, in this or other embodiments both of the inlet manifold and the outlet manifold are formed separately from the heat exchanger body, and the inlet manifold and the outlet manifold are secured to the heat exchanger body after forming of the heating exchanger body.

Additionally or alternatively, in this or other embodiments the heat exchanger body includes a plurality of fins connecting heat exchanger tubes of the plurality of heat exchanger tubes.

Additionally or alternatively, in this or other embodiments the inlet manifold includes a plurality of inlet passages connecting the fluid inlet to the plurality of heat exchanger tubes.

Additionally or alternatively, in this or other embodiments the plurality of inlet passages includes a plurality of first inlet passages extending from the fluid inlet and a plurality of second inlet passages branching off from the plurality of first inlet passages.

Additionally or alternatively, in this or other embodiments the outlet manifold includes a plurality of outlet passages connecting the fluid outlet to the plurality of heat exchanger tubes.

Additionally or alternatively, in this or other embodiments the plurality of outlet passages includes a plurality of first outlet passages extending from the plurality of heat exchanger tubes and a plurality of second outlet passages. Each second outlet passage of the plurality of second outlet passages is fluidly connected to two or more first outlet passages of the plurality of first outlet passages.

Additionally or alternatively, in this or other embodiments the additive manufacturing processes includes 3D printing.

Additionally or alternatively, in this or other embodiments the subtractive manufacturing processes includes one or more of machining and milling.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of a heat exchanger;
FIG. 2 is a schematic illustration of a first exemplary method of forming a heat exchanger;
FIG. 3 is a schematic illustration of a second exemplary method of forming a heat exchanger; and
FIG. 4 is a schematic illustration of a third exemplary method of forming a heat exchanger.

### DETAILED DESCRIPTION

A detailed description of one or more embodiments of the disclosed apparatus and method are presented herein by way of exemplification and not limitation with reference to the Figures.

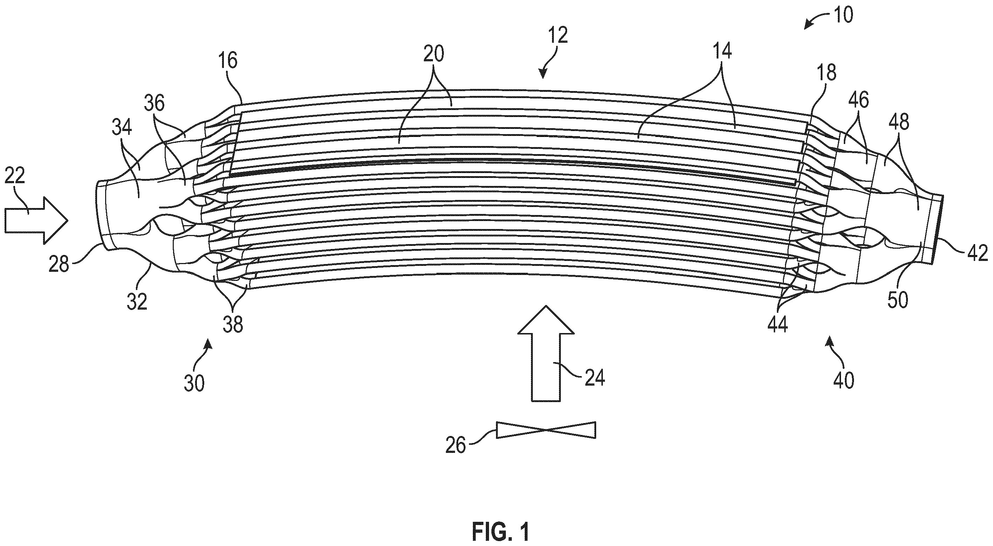

Referring now to FIG. 1, illustrated is an embodiment of a heat exchanger 10. The heat exchanger 10 includes a heat exchanger body 12 having a plurality of body tubes 14 extending from a first body end 16 to a second body end 18, opposite the first body end 16. In some embodiments, the body tubes 14 extend linearly from the first body end 16 to the second body end 18, while in other embodiments, such as shown in FIG. 1, the body tubes 14 extend curvilinearly from the first body end 16 to the second body end 18. In yet other embodiments, the body tubes 14 extend a combination of linearly and curvilinearly along their length from the first body end 16 to the second body end 18. The body tubes 14 may have a constant size and shape along their length, or alternatively one or more of the tube size and tube shape may vary along their length.

In some embodiments, such as shown in FIG. 1, the heat exchanger body 12 includes a plurality of fins 20. The fins 20 may extend between adjacent body tubes 14 and along a length of the body tubes 14 to interconnect the body tubes 14 and increase surface area of the heat exchanger body 12 and improve effectiveness of the heat exchanger 10. The body tubes 14 are configured to direct a flow of fluid 22 through the heat exchanger body 12. A flow of air 24 is directed across the body tubes 14 by, for example, a fan 26, and the flow of fluid 22 is cooled, or alternatively heated, via exchange of thermal energy between the flow of air 24 and the flow of fluid 22 via the heat exchanger body 12.

The flow of fluid 22 enters the heat exchanger 10 through a fluid inlet 28 and is distributed to the body tubes 14 by flowing through an inlet manifold 30. In some embodiments, such as illustrated in FIG. 1, the inlet manifold 30 includes an inlet manifold body 32 at which the fluid inlet 28 is located, and a plurality of first inlet passages 34 branching from the inlet manifold body 32. A plurality of second inlet passages 36 branch from each of the first inlet passages 34, and a plurality of third inlet passages 38 branch from each of the second inlet passages 36. The plurality of third inlet passages 38 are each connected to a body tube 14 of the plurality of body tubes 14 to direct the flow of fluid 22 into the body tubes 14. The inlet passages 34, 36, 38 are configured and sized to distribute selected proportions of the flow of fluid 22 into each of the body tubes 14, in some embodiments the selected proportions are equal amounts of the flow of fluid 22 into each of the body tubes 14. One skilled in the art will readily appreciate that while the inlet manifold 30 described herein distributes the flow of fluid 22 to the body tubes 14 via the inlet passages 34, 36, 38, this configuration is merely exemplary and that other configurations of passages or features may be utilized at the inlet manifold 30 to distribute the flow of fluid 14 into the body tubes 14.

Similarly, the flow of fluid 22 exits the body tubes 14 and is collected at an outlet manifold 40 before exiting the heat exchanger 10 through a fluid outlet 42. The outlet manifold 40 includes a plurality of first outlet passages 44, each first outlet passage 44 connected to a body tube 14 of the heat exchanger body 12 to collect the flow of fluid 22 from the body tubes 14. A plurality of second outlet passages 46 collect the flow of fluid 22 from the first outlet passages 44, where each second outlet passage 46 is connected to a number of first outlet passages 44. A plurality of third outlet passages 48 collect the flow of fluid 22 from the second outlet passages 46, where each third outlet passage 48 is connected to a number of second outlet passages 46. The third outlet passages 48 are connected to an outlet manifold body 50, which directs the flow of fluid 22 from the third outlet passages 48 and out of the fluid outlet 42.

While manufacturing components such as heat exchangers 10 by additive manufacturing methods such as 3D printing can be advantageous in many respects, the use of additive manufacturing places certain geometric constraints on the heat exchanger 10, such as in the construction of the inlet manifold 30 and the outlet manifold 40. To overcome these geometric constraints, a hybrid construction of the heat exchanger 10 is utilized.

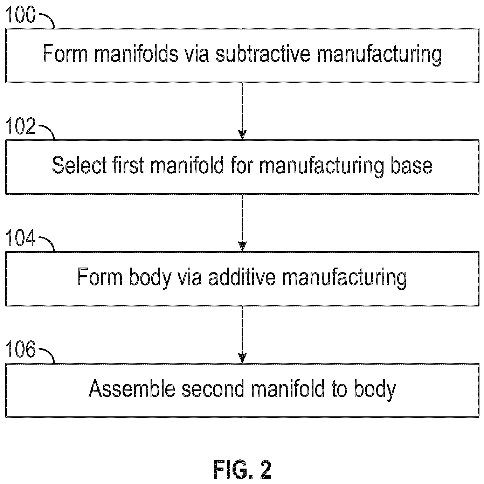

Referring to FIG. 2, in a first exemplary method, the inlet manifold 30 and the outlet manifold 40 are formed not by additive manufacturing, but by subtractive manufacturing methods, such as machining or milling at step 100 to arrive at the completed configurations of the inlet manifold 30 and the outlet manifold. In the embodiment of FIG. 2, one of the manifolds, for example, the inlet manifold 30, is utilized as a manufacturing base for the heat exchanger body 12 at step 102, which is then formed onto the inlet manifold at step 104 by one or more additive manufacturing processes, such as 3D printing. The additive manufacturing processes form the body tubes 14 and the fins 20 of the heat exchanger body 12 onto the inlet manifold 30. Once the heat exchanger body 12 is formed on the inlet manifold 30, the outlet manifold 40, which may be formed not by additive manufacturing, but by machining or milling, is assembled to the heat exchanger body 12 to form the heat exchanger 10 at step 106.

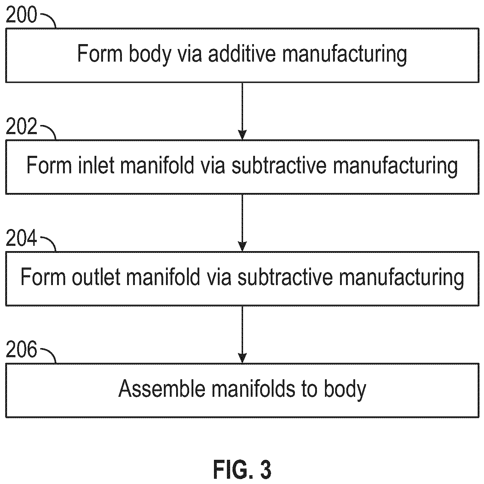

Referring to FIG. 3, another exemplary method of forming the heat exchanger 10 is illustrated. In this second exemplary method, the heat exchanger body 12 is first formed at step 200 via one or more additive manufacturing processes. The inlet manifold 30 is formed at step 202 and the outlet manifold 40 is formed at step 204. The inlet manifold 30 and the outlet manifold 40 are formed independently from the heat exchanger body 12, in some embodiments via subtractive manufacturing processes such as machining or milling. Once the inlet manifold 30 and the outlet manifold 40 are formed, they are assembled to the heat exchanger body 12 to define the heat exchanger 10 at step 206.

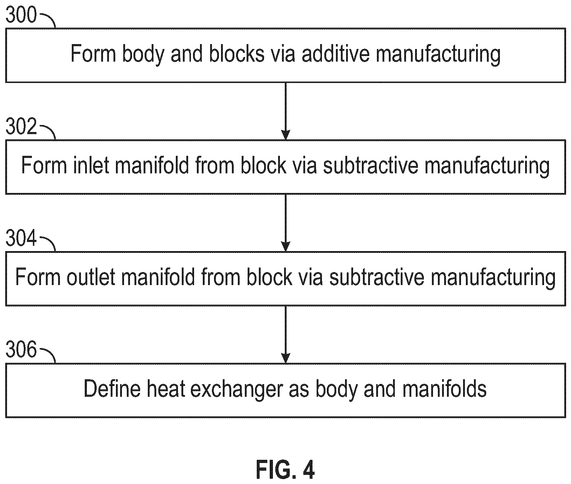

Referring now to FIG. 4, yet another exemplary method of forming the heat exchanger 10 is illustrated. In this third exemplary embodiment, the heat exchanger body 12 is formed by additive manufacturing processes, together with rough shapes, such as blocks, at the positions of one or more of the inlet manifold 30 and the outlet manifold 40 at step 300. Once the heat exchanger body 12 is formed, then the inlet manifold 30 is formed in place connected to the heat exchanger body 12 at step 302 by one or more subtractive manufacturing processes such as machining or milling performed on the block at the position of the inlet manifold 30. Similarly, the outlet manifold 40 is formed in place connected to the heat exchanger body 12 at step 304 by one or more subtractive manufacturing processes such as machining or milling performed on the block at the position of the outlet manifold 40. The heat exchanger body 12, the inlet manifold 30 and the outlet manifold 40 thus define the heat exchanger 10 at step 306.

The heat exchanger 10 having this hybrid construction, with an additively manufacture heat exchanger body 12 and subtractively manufactured manifolds 30, 40 allows for the manifolds 30, 40 to have a shorter flow length than a manifold formed by additive manufacturing. A primary benefit of this configuration is the ability to reduce the overall required hot inlet to outlet (fractal header) length of the heat exchanger 10, which can enable either a more compact unit or increased tube length that can be used to obtain additional heat transfer capability.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A heat exchanger, comprising:
a heat exchanger body including a plurality of heat exchanger tubes;
an inlet manifold connected to the heat exchanger body and configured to distribute a flow of fluid from a fluid inlet of the inlet manifold to the plurality of heat exchanger tubes; and
an outlet manifold connected to the heat exchanger body and configured to collect the flow of fluid from the plurality of heat exchanger tubes and direct the flow of fluid through a fluid outlet;
wherein:
the heat exchanger body is formed via one or more additive manufacturing processes; and
at least one of the inlet manifold and the outlet manifold is formed via one or more subtractive manufacturing processes.

2. The heat exchanger of claim 1, wherein the heat exchanger body includes a plurality of fins connecting heat exchanger tubes of the plurality of heat exchanger tubes.

3. The heat exchanger of claim 1 or 2, wherein the inlet manifold includes a plurality of inlet passages connecting the fluid inlet to the plurality of heat exchanger tubes.

4. The heat exchanger of claim 3, wherein the plurality of inlet passages includes a plurality of first inlet passages extending from the fluid inlet and a plurality of second inlet passages branching off from the plurality of first inlet passages.

5. The heat exchanger of any preceding claim, wherein the outlet manifold includes a plurality of outlet passages connecting the fluid outlet to the plurality of heat exchanger tubes.

6. The heat exchanger of claim 5, wherein the plurality of outlet passages includes a plurality of first outlet passages extending from the plurality of heat exchanger tubes and a plurality of second outlet passages, each second outlet passage of the plurality of second outlet passages fluidly connected to two or more first outlet passages of the plurality of first outlet passages.

7. The heat exchanger of any preceding claim, wherein the additive manufacturing processes includes 3D printing.

8. The heat exchanger of any preceding claim, wherein the subtractive manufacturing processes includes one or more of machining and milling.

9. A method of forming a heat exchanger comprising:
forming a heat exchanger body including a plurality of heat exchanger tubes via one or more additive manufacturing processes; and
forming at least one of the inlet manifold and the outlet manifold via one or more subtractive manufacturing processes, wherein:
the inlet manifold is connected to the heat exchanger body and is configured to distribute a flow of fluid from a fluid inlet of the inlet manifold to the plurality of heat exchanger tubes; and
the outlet manifold is connected to the heat exchanger body and is configured to collect the flow of fluid from the plurality of heat exchanger tubes and direct the flow of fluid through a fluid outlet.

10. The method of claim 9, wherein one of the inlet manifold and the outlet manifold is utilized as a base for forming the heat exchanger body via the one or more additive manufacturing processes.

11. The method of claim 9 or 10, further comprising:
forming a block at the location of one of the inlet manifold and the outlet manifold via one or more additive manufacturing processes simultaneously with the forming of the heat exchanger body; and
forming one of the inlet manifold and the outlet manifold from the block via one or more subtractive manufacturing processes, optionally further comprising:
forming a block at the locations of both of the inlet manifold and the outlet manifold via one or more additive manufacturing processes simultaneously with the forming of the heat exchanger body; and
forming both of the inlet manifold and the outlet manifold from the blocks via one or more subtractive manufacturing processes.

12. The method of claim 9, 10 or 11, further comprising:
forming both of the inlet manifold and the outlet manifold separately from the heat exchanger body; and
securing the inlet manifold and the outlet manifold to the heat exchanger body after forming of the heating exchanger body; and/or
wherein the heat exchanger body includes a plurality of fins connecting heat exchanger tubes of the plurality of heat exchanger tubes.

13. The method of any of claims 9 to 12, wherein the inlet manifold includes a plurality of inlet passages connecting the fluid inlet to the plurality of heat exchanger tubes, optionally,
wherein the plurality of inlet passages includes a plurality of first inlet passages extending from the fluid inlet and a plurality of second inlet passages branching off from the plurality of first inlet passages.

14. The method of any of claims 9 to 13, wherein the outlet manifold includes a plurality of outlet passages connecting the fluid outlet to the plurality of heat exchanger tubes, optionally,
wherein the plurality of outlet passages includes a plurality of first outlet passages extending from the plurality of heat exchanger tubes and a plurality of second outlet passages, each second outlet passage of the plurality of second outlet passages fluidly connected to two or more first outlet passages of the plurality of first outlet passages.

15. The method of any of claims 9 to 14, wherein the additive manufacturing processes includes 3D printing; and/or
wherein the subtractive manufacturing processes includes one or more of machining and milling.
